(19) Europäisches Patentamt
European Patent Office
Office européen des brevets

(11) Veröffentlichungsnummer : **0 368 803 B1**

(12) # EUROPÄISCHE PATENTSCHRIFT

(45) Veröffentlichungstag der Patentschrift : **07.04.93 Patentblatt 93/14**

(51) Int. Cl.[5] : **C10M 137/10,** // (C10N30/06, 40:08)

(21) Anmeldenummer : **89810817.0**

(22) Anmeldetag : **31.10.89**

(54) **Schmierstoffzusammensetzungen.**

(30) Priorität : **08.11.88 CH 4146/88**

(43) Veröffentlichungstag der Anmeldung : **16.05.90 Patentblatt 90/20**

(45) Bekanntmachung des Hinweises auf die Patenterteilung : **07.04.93 Patentblatt 93/14**

(84) Benannte Vertragsstaaten : **BE DE ES FR GB IT NL**

(56) Entgegenhaltungen :
**EP-A- 0 267 875**
**FR-A- 1 137 298**
**GB-A- 1 018 307**
**US-A- 2 250 049**
**US-A- 3 254 027**

(73) Patentinhaber : **CIBA-GEIGY AG**
**Klybeckstrasse 141**
**CH-4002 Basel (CH)**

(72) Erfinder : **Zinke, Horst, Dr.**
**Höhenweg 34**
**W-6101 Reichelsheim/Odw. (DE)**

EP 0 368 803 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft neue Schmierstoff- und Hydraulikflüssigkeitszusammensetzungen, enthaltend Triarylthionophosphate und die Verwendung der Triarylthionophosphate in Schmierstoffen und Hydraulikflüssigkeiten als Verschleissschutz-Zusätze.

Aus der FR 1 137 298 ist eine grosse Anzahl von Triestern der Thiophosphorsäure als Antioxidantien, Antikorrosionsmittel, Verschleissschutz und Extremdruckzusatz, beispielsweise in Schmierstoffen und anderen organischen Produkten, bekannt.

Es sind auch weitere Zusammensetzungen, enthaltend Arylthionophosphate, bekannt, so beispielsweise aus der DE-AS 1 288 224, die Diarylalkyl- oder Diarylbenzylthionophosphate als Hochdruckzusätze in Schmierölen beschreibt oder aus der DE-OS 2 357 199, die Verschleissschutz- und Hochdruckzusätze für Schmieröle nennt. Letztere Zusätze sind eine Mischung aus den Triestern der Phosphonothionsäure, der Ester der Orthophosphorsäure und aus Mono- und Diestern der Phosphorsäure mit stickstoffhaltigen organischen Basen. Aus der US 2,250,049 sind gemischte Triarylthiophosphate bekannt, die verschiedene Arylreste tragen und wenigstens ein Arylrest wenigstens 9 C-Atome aufweist. Diese spezifische Gruppe von Triarylthiophosphaten ist als Plastifizierungsmittel und Modifizierungsmittel für die Herstellung verschiedener Kunststoffe geeignet. Die JP-Kokai 61/26696 beschreibt ein Oel für die spanabhebende Metallbearbeitung, enthaltend, zur Reduzierung der Oxidation, Triester der Thiophosphorsäure.

Die Europäische Patentanmeldung 0 245 852 beschreibt ein Verfahren zur Herstellung von flüssigen Triarylthiophosphat-Mischungen, die als feuerhemmende Mittel in synthetischen Polymeren angewendet werden.

Es wurden nun bestimmte Triarylthionophosphat-Gemische gefunden, die in Zusammensetzungen mit Schmierstoffen und Hydraulikflüssigkeiten ganz herausragende Eigenschaften aufweisen und die sich beispielsweise in Schmierölen in ihrem Wirkungsverhalten deutlich gegenüber vorbeschriebenen Zusammensetzungen abheben.

Die vorliegende Erfindung betrifft Zusammensetzungen, enthaltend

a) einen Schmierstoff oder eine Hydraulikflüssigkeit und

b) ein Triarylthionophosphat-Gemisch der Formel I

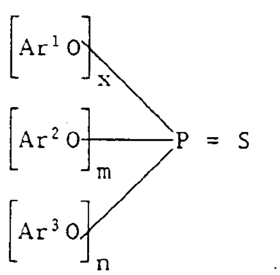

(I),

wobei
x 0 bis 2,7,
m 3-(x+n) und
n 0 bis 3-(x+m) sind, und
x + m + n = 3 ist,
$Ar^1$ die Bedeutung von

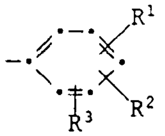

$Ar^2$ die Bedeutung von

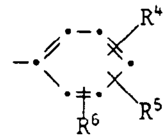

und
Ar³ die Bedeutung von

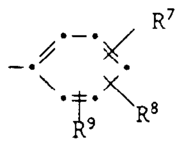

haben,
wobei $R^1$, $R^2$, $R^3$, $R^5$, $R^6$, $R^8$ und $R^9$ unabhängig voneinander die Bedeutung von -H, Alkyl mit 1 bis 18 C-Atomen, Cycloalkyl mit 5 bis 12 C-Atomen, mit 1 bis 3 $C_1$-$C_4$-Alkylgruppen substituiertes Cycloalkyl mit 5 bis 12 Ring-C-Atomen, Phenyl oder Phenyl-$C_1$-$C_3$-alkyl haben und $R^4$ und $R^7$, unabhängig voneinander, die Bedeutung von Alkyl mit 1 bis 18 C-Atomen, Cycloalkyl mit 5 bis 12 C-Atomen, mit 1 bis 3 $C_1$-$C_4$-Alkylgruppen substituiertes Cycloalkyl mit 5 bis 12 Ring-C-Atomen, Phenyl oder Phenyl-$C_1$-$C_3$-alkyl haben, mit der Massgabe, dass x und n nicht gleichzeitig 0 sind, dass wenigstens zwei der Reste $Ar^1$, $Ar^2$ und $Ar^3$ voneinander verschieden sind und dass Dixylenylparakresylthionophosphat ausgeschlossen ist.

Im Triarylthionophosphat-Gemisch der obengenannten Formel I sind zweckmässig x 0 bis 2,6, m 0,02 bis 2,98 und n 0 bis 2,98.

Bevorzugt ist ein Triarylthionophosphat-Gemisch der obengenannten Formel I, worin x 0,1 bis 2,6, m 0,1 bis 2,9 und n 0 bis 2,8 sind.

In Verbindungen der Formel I ist $Ar^1$ bevorzugt Phenyl.

Zweckmässig ist ein Triarylthionophosphat-Gemisch der Formel I, worin $Ar^1$ Phenyl und x 0,001 bis 2,6 sind.

Im Triarylthionophosphat-Gemisch der Formel I sind vorzugsweise $Ar^1$ Phenyl und x 0,01 bis 2,6, m 0,02 bis 2,99 und n 0 bis 2,97.

Bedeuten die Reste $R^1$, $R^2$, $R^3$, $R^4$, $R^5$, $R^6$, $R^7$, $R^8$ oder $R^9$ Alkyl mit 1 bis 18 C-Atomen, so sind damit beispielsweise Methyl, Ethyl, Propyl, Isopropyl, n-Butyl, Isobutyl, 2-Butyl, t-Butyl, Pentyl, Isopentyl, Hexyl, 1-Methylpentyl, 1,3-Dimethylbutyl, 2-Ethylbutyl, Heptyl, 3-Heptyl, 1-Methylhexyl, Isoheptyl, Octyl, 2-Ethylhexyl, 1,1,3,3-Tetramethylbutyl, 1-Methylheptyl, Nonyl, 1,1,3-Trimethylhexyl, 3,5,5-Trimethylhexyl, Decyl, Undecyl, Dodecyl, 1-Methylundecyl, Tridecyl, Tetradecyl, Pentadecyl, Hexadecyl, Heptadecyl oder Octadecyl zu nennen. Die Reste mit 3 bis 18 C-Atomen können als geradkettige oder als verzweigtkettige Reste oder als Gemische von gerad-und verzweigtkettigen Resten vorliegen. Verzweigtkettige Reste mit 4 bis 18 C-Atomen können darüberhinaus Gemische verschiedener isomerer Strukturen darstellen. Beispiele der zweckmässigen und bevorzugten Alkylreste lassen sich sinngemäss der obigen Aufstellung entnehmen.

Die Bedeutung der Reste $R^1$ bis $R^9$ ist auch Cycloalkyl mit 5 bis 12 C-Atomen. Als Beispiele sind anzuführen: Cyclopentyl, Cyclohexyl, Cyclooctyl oder Cyclododecyl. Die Cycloalkylgruppen mit 5 bis 12 Ring-C-Atomen können durch 1 bis 3 $C_1$-$C_4$-Alkylgruppen substituiert sein. Beispiele dafür sind 2- oder 4-Methylcyclohexyl, Dimethylcyclohexyl oder Trimethylcyclohexyl, t-Butylcyclohexyl. Bevorzugt wird Cyclohexyl.

Bedeuten die Reste $R^1$ bis $R^9$ Phenyl-$C_1$-$C_3$-alkyl, so können als Beispiele genannt werden Benzyl, $\alpha$-Methylbenzyl oder $\alpha,\alpha$-Dimethylbenzyl.

Stellt $R^1$, $R^2$, $R^3$, $R^4$, $R^5$, $R^6$, $R^7$, $R^8$ oder $R^9$ ein einzelner Substituent mit einer der obengenannten Bedeutungen, ausgenommen -H, dar, so ist am entsprechenden Ring $Ar^1$, $Ar^2$ respektive $Ar^3$ eine 2-, 3-, 4-, 5- oder 6-Stellung möglich, zweckmässig ist die 2-, 3- oder 4-Position, bevorzugt ist die 2- oder 4-Position und, falls zwei Substituenten am jeweiligen Ring vorhanden sind, ist eine Anordnung der Substituenten in 2,4-Stellung zweckmässig, falls drei Substituenten am jeweiligen Ring vorhanden sind, ist eine 2,4,6-Stellung derselben zweckmässig.

Zweckmässig stellen in Gemischen der Formel I $R^4$ $C_1$-$C_{15}$-Alkyl, Cyclohexyl, Phenyl oder Phenyl-$C_1$-$C_3$-alkyl, $R^5$ -H oder $C_1$-$C_{12}$-Alkyl und $R^6$ -H oder $C_1$-$C_5$-Alkyl dar.

In einer besonders zweckmässigen Ausführungsform bedeuten $R^4$ $C_1$-$C_{12}$-Alkyl, Cyclohexyl oder Phenyl-$C_1$-$C_3$-alkyl und $R^5$ und $R^6$, unabhängig voneinander, -H oder $C_1$-$C_4$-Alkyl.

Bevorzugt bedeuten $R^4$ $C_3$-$C_{12}$-Alkyl oder Cyclohexyl und $R^5$ und $R^6$, unabhängig voneinander, -H oder

$C_1$-$C_4$-Alkyl darstellen.

Besonders bevorzugt bedeuten $R^5$ und $R^6$, unabhängig voneinander, -H oder -$CH_3$ darstellen.

Ganz besonders bevorzugt stellen $R^4$ $C_3$-$C_9$-Alkyl und $R^5$ und $R^6$ -H dar.

Bevorzugt ist eine ortho- oder para-Stellung des Restes $R^4$ im Substituenten $Ar^2$.

$R^5$ und $R^6$ bedeuten vorzugsweise -H.

Zweckmässig stellen in Gemischen der Formel I $R^7$ $C_1$-$C_{15}$-Alkyl oder Cyclohexyl und $R^8$ und $R^9$, unabhängig voneinander, -H oder $C_1$-$C_{12}$-Alkyl dar.

Besonders zweckmässig stellen $R^7$ $C_1$-$C_{12}$-Alkyl oder Cyclohexyl, $R^8$ -H oder $C_1$-$C_5$-Alkyl und $R^9$ -H oder $C_1$-$C_{12}$-Alkyl dar.

Bevorzugt stellen $R^8$ -H oder $C_1$-$C_4$-Alkyl und $R^9$ -H oder $C_1$-$C_{10}$-Alkyl dar.

Besonders bevorzugt stellen $R^7$ $C_3$-$C_{10}$-Alkyl oder Cyclohexyl und $R^8$ und $R^9$ unabhängig voneinander -H oder $C_1$-$C_4$-Alkyl dar.

Beispiele für Triarylthionophosphat-Gemische der Formel I sind:

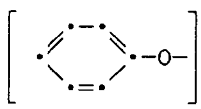 0,01 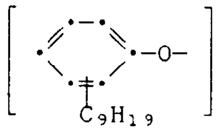 2,87 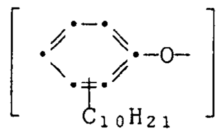 0,12 P = S;

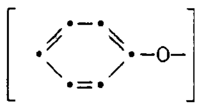 0,60 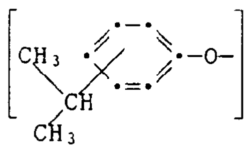 2,40 P = S;

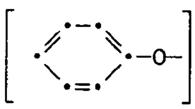 2,34 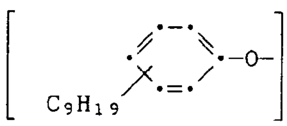 0,50 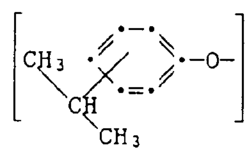 0,16 P = S;

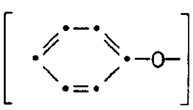 1,74 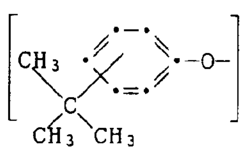 1,16 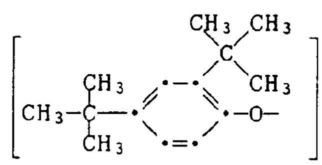 0,10 P = S;

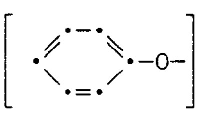 2,20 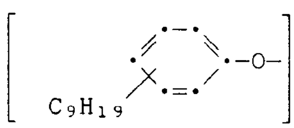 0,40 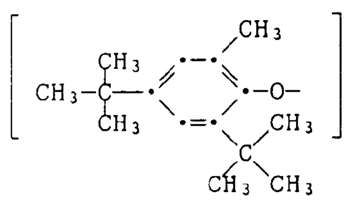 0,40 P = S;

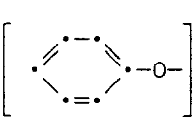 2,25 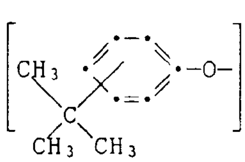 0,7 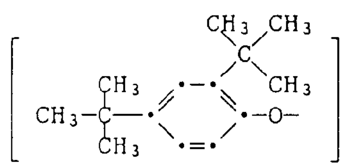 0,05 P = S;

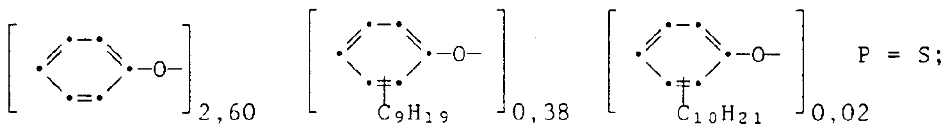

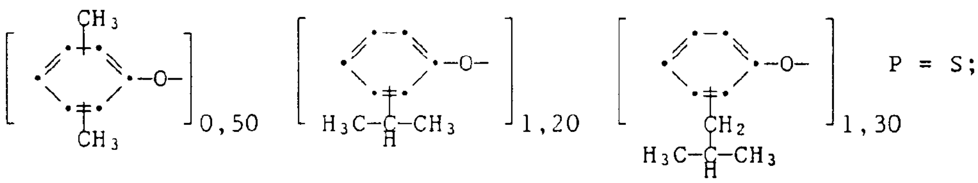

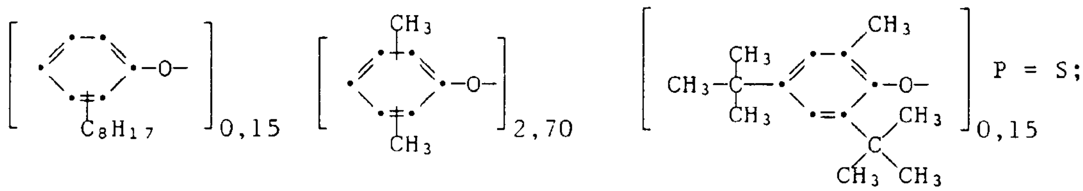

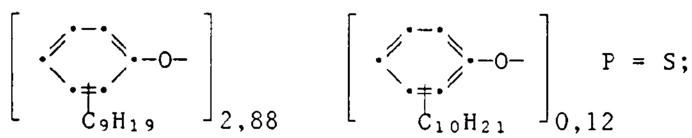

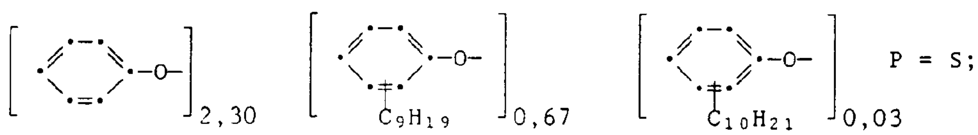

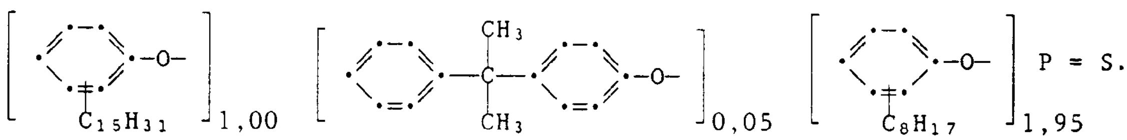

Besonders zu nennen sind beispielsweise Zusammensetzungen enthaltend wenigstens ein Triarylthionophosphat-Gemisch aus der Reihe mit den Formeln

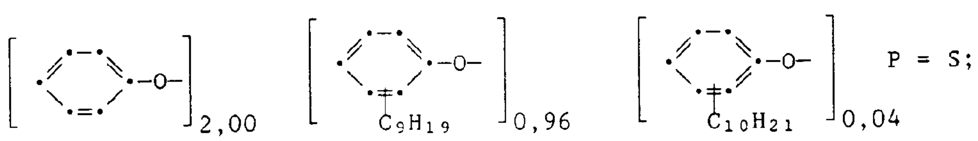

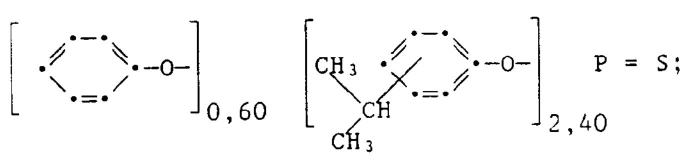

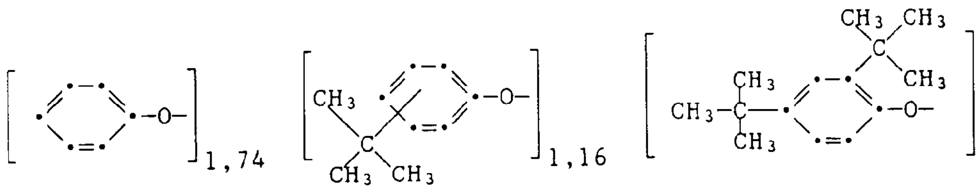

P = S;

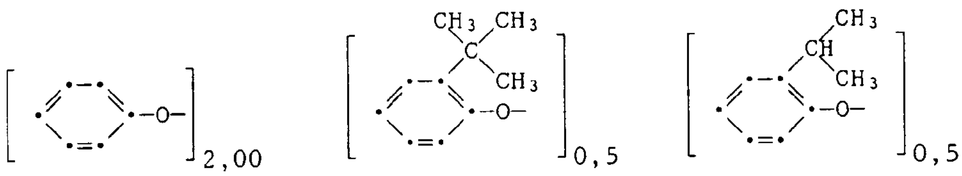

P = S;

oder

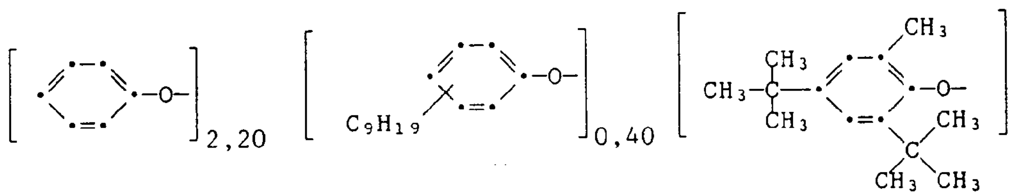

P = S;

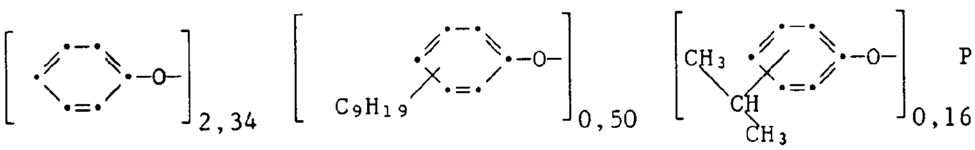

P = S

und

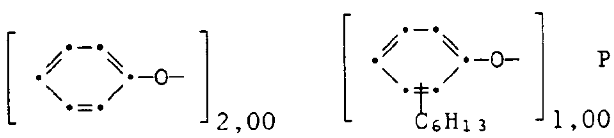

P = S.

Die Triarylthionophosphat-Gemische können nach an sich bekannten Methoden hergestellt werden.

Es wird zum Beispiel auf Houben-Weyl "Methoden der Organischen Chemie", Band 12, Teil 2, Seiten 623-652 (G. Thieme Verlag, Stuttgart, 1964) oder auf G.M. Kosolapoff and L. Maier, "Organic Phosphorus Compounds", Volume 7, Seiten 482-871 und insbesondere Seiten 717-722 (John Wiley and Sons, New York, 1976) verwiesen.

In der Regel wird die Reaktion derart ausgeführt, dass man vom Alkylphenol resp. vom Phenol/Alkylphenol-Gemisch ausgeht und mit Phosphortrichlorid zunächst das entsprechende Phosphorigsäuretriarylester-Gemisch synthetisiert, das seinerseits anschliessend mit Schwefel zum Triarylthionophosphat-Gemisch umgesetzt wird.

Diese Reaktion folgt der allgemeinen Gleichung:

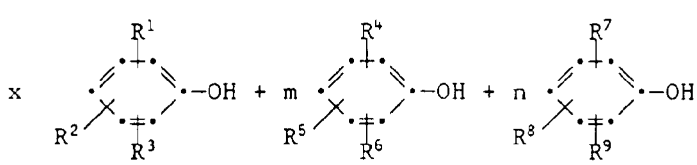

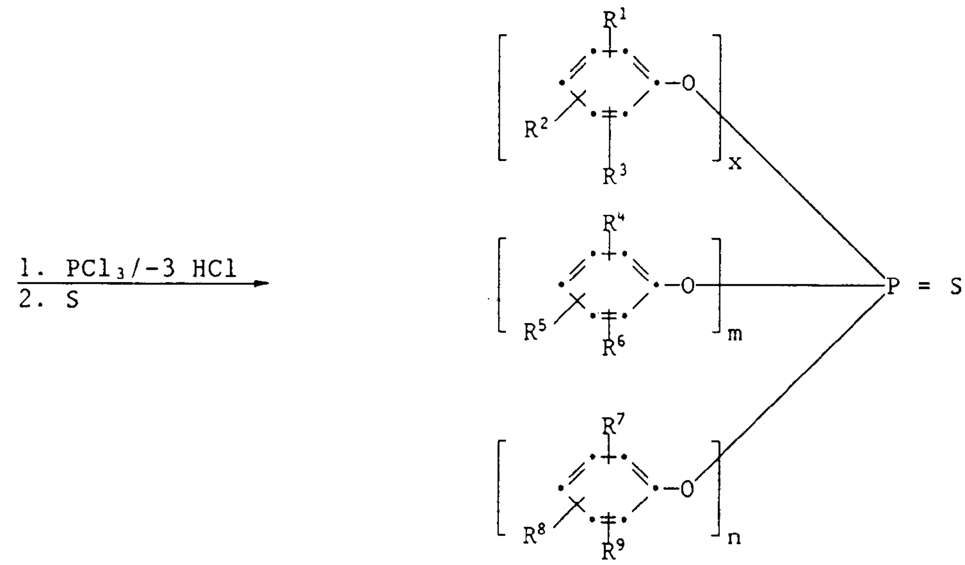


wobei $R^1$, $R^2$, $R^3$, $R^4$, $R^5$, $R^6$, $R^7$, $R^8$ und $R^9$, sowie x, m und n die oben angegebene Bedeutung haben.

Die erhaltenen Triarylthionophosphat-Gemische können durch Alkaliwäsche gereinigt werden und stellen im Regelfalle klare, z.T. gefärbte Flüssigkeiten öliger Konsistenz dar, die sich beispielsweise leicht in verschiedene Oelformulierungen einarbeiten lassen.

Die angegebenen Triarylthionophosphat-Gemische können, da sie in der Praxis technische Produkte darstellen, von Spuren nicht ausdrücklich erwähnter Triarylthionophosphate begleitet sein. Beispielsweise können in Verbindungen der Formel I mit x = 0 trotzdem Spuren eines Triarylthionophosphat-Gemisches mit einem unsubstituierten Phenylrest vorhanden sein.

Die Zusammensetzungen nach vorliegender Erfindung können eines oder mehrere der Triarylthionophosphat-Gemische der Formel I enthalten.

In Zusammensetzungen nach vorliegender Erfindung kann das Triarylthionophosphat-Gemisch in Mengen von 0,01 bis 10, zweckmässig von 0,05 bis 5, vorzugsweise von 0,05 bis 3 und insbesondere von 0,1 bis 2 Gew.-%, bezogen auf den Schmierstoff oder die Hydraulikflüssigkeit, angewendet werden.

Wie eingangs erwähnt, enthalten die erfindungsgemässen Zusammensetzungen einen Schmierstoff oder eine Hydraulikflüssigkeit und das Triarylthionophosphat-Gemisch.

Als Schmierstoffe oder Hydraulikflüssigkeiten kommen die an sich bekannten Produkte zum Einsatz.

Die in Frage kommenden Schmierstoffe und Hydraulikflüssigkeiten sind dem Fachmann geläufig und z.B. in Dieter Klamann "Schmierstoffe und verwandte Produkte", Verlag Chemie, Weinheim, 1982, in Schewe-Kobek, "Das Schmiermittel-Taschenbuch", Dr. Alfred Hüthig-Verlag, Heidelberg, 1974 oder in "Ullmanns Encyclopädie der technischen Chemie", Band 13, Seiten 85-94 (Verlag Chemie, Weinheim, 1977) beschrieben.

Beispiele hierfür sind Schmierstoffe und Hydraulikflüssigkeiten auf Mineralöl-Basis oder synthetische Schmierstoffe oder Hydraulikflüssigkeiten, insbesondere solche, die Carbonsäure-Esterderivate darstellen und bei Temperaturen von 200°C und höher verwendet werden. Andere Hydraulikflüssigkeiten sind Oel-in-Wasser- oder Wasser-in-Oel-Systeme, ferner wässrige Systeme.

Beispiele von synthetischen Schmierstoffen umfassen Schmierstoffe auf der Basis eines Diesters einer zweiwertigen Säure mit einem einwertigen Alkohol, wie z.B. Dioctylsebacat oder Dinonyladipat, eines Triesters von Trimethylolpropan mit einer einwertigen Säure oder mit einem Gemisch solcher Säuren, wie z.B. Trimethylolpropantripelargonat, Trimethylolpropan-tricaprylat oder Gemische davon, eines Tetraesters von Pentaerythrit mit einer einwertigen Säure oder mit einem Gemisch solcher Säure, wie z.B. Pentaerythrit-tetracaprylat, oder eines komplexen Esters von einwertigen und zweiwertigen Säuren mit mehrwertigen Alkoholen, wie z.B. ein komplexer Ester von Trimethylolpropan mit Capryl- und Sebacinsäure oder von einem Gemisch davon.

Besonders geeignet sind neben Mineralölen z.B. Poly-α-Olefine, Schmierstoffe auf Esterbasis, Phosphate, Glykole, Polyglykole und Polyalkylenglykole, sowie deren Mischungen mit Wasser.

Die erfindungsgemässen Zusammensetzungen zeigen bei vermindertem Phosphorund Schwefelgehalt gegenüber bekannten Produkten, wie Zinkdithiophosphat, Dithiophosphorsäure-0,0-dialkyl-S-alkyl-estern, Trikresylphosphat usw. im gesamten Temperaturbereich, in dem sie angewendet werden gute Anti-Verschleisseigenschaften. Insbesondere ab einem Temperaturbereich von 150°C sind vorliegende Zusammensetzungen den herkömmlichen Produkten überlegen. Dies ist von grosser Bedeutung, da beispielsweise in der Verbrennungsmotorentechnik mit der Weiterentwicklung auch die Schmierstoffe steigender Beanspruchung unterliegen und über längere Zeiträume höheren Temperaturen ausgesetzt sind. Bei höherer Temperatur vermögen die bekannten Zusätze keine oder nur noch eine ungenügende Verschleissschutzwirkung zu entfalten.

Vorliegende Erfindung betrifft auch die Verwendung der genannten Zusammensetzung als Verschleissschutz-Zusatz in Schmierstoffen und Hydraulikflüssigkeiten.
Zweckmässig wird die Zusammensetzung für Einsatzzwecke mit Temperaturen von 60 bis 200°C und vorzugsweise für Temperaturen von 100 bis 180°C verwendet. Ganz besonders bevorzugt ist eine Verwendung der Zusammmensetzungen für Einsatzzwecke bei Temperaturen von 150 bis 180°C.

Die erfindungsgemässen Zusammensetzungen sind zweckmässig zur Verwendung als Schmieröl-Zusammensetzungen für Verbrennungskraftmaschinen im allgemeinen, d.h. für Motoren nach dem Dieselprinzip und für Motoren nach dem Ottoprinzip geeignet. Unter der Bezeichnung Ottoprinzip werden die fremdgezündeten Verbrennungskraftmaschinen nach dem Hubkolbenprinzip verstanden. Die Verbrennungskraftmaschinen können den bekannten Zwecken dienen, also beispielsweise zur Verwendung als Stationärmotoren oder als Antriebe in Verkehrsmitteln, wie Schiffen, Flugzeugen und insbesondere in Kraftfahrzeugen.

Die Erfindung kann somit auch Zusammensetzungen betreffen, worin das Schmieröl ein Oel für Verbrennungskraftmaschinen nach dem Diesel- oder Ottoprinzip ist.

Die Schmierstoffe und Hydraulikflüssigkeiten können zusätzlich andere Additive enthalten, die zugegeben werden, um die Grundeigenschaften von Schmierstoffen zu verbessern. Dazu gehören: Antioxidantien, Metall-Desaktivatoren, Rostinhibitoren, Viskositätsindex-Verbesserer, Stockpunkterniedriger, Dispergiermittel, Detergentien, Hochdruck-Zusätze und andere Verschleissschutz-Additive.

Beispiele dafür sind:

<u>1. Antioxidantien</u>

<u>1.1. Alkylierte Monophenole</u>, z.B. 2,6-Di-tert.butylphenol, 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert.butyl-4-methoxymethylphenol, 2,6-Di-nonyl-4-methylphenol.

<u>1.2. Alkylierte Hydrochinone</u>, z.b. 2,6-Di-tert.butyl-4-methoxyphenol, 2,5-Di-tert.butyl-hydrochinon, 2,5-Di-tert.amyl-hydrochinon, 2,6-Diphenyl-4-octadecyloxyphenol.

<u>1.3. Hydroxylierte Thiodiphenylether</u>, z.b. 2,2′-Thio-bis-(6-tert.butyl-4-methylphenol), 2,2′-Thio-bis-(4-octylphenol), 4,4′-Thio-bis-(6-tert.butyl-3-methylphenol), 4,4′-Thio-bis-(6-tert.butyl-2-methylphenol).

<u>1.4. Alkyliden-Bisphenole</u>, z.b. 2,2′-Methylen-bis-(6-tert.butyl-4-methylphenol), 2,2′-Methylen-bis-(6-tert.butyl-4-ethylphenol), 2,2′-Methylen-bis-[4-methyl-6-(α-methylcyclohexyl)-phenol], 2,2′-Methylen-bis-(4-methyl-6-cyclohexylphenol), 2,2′-Methylen-bis-(6-nonyl-4-methylphenol), 2,2′-Methylen-bis-(4,6-di-tert.butylphenol), 2,2′-Ethyliden-bis-(4,6-di-tert.butylphenol), 2,2′-Ethyliden-bis-(6-tert.butyl-4-isobutylphenol), 2,2′-Methylen-bis-[6-(α-methylbenzyl)-4-nonylphenol], 2,2′-Methylen-bis-[6-(α,α-dimethylbenzyl)-4-nonylphenol], 4,4′-Methylen-bis-(2,6-di-tert.butylphenol), 4,4′-Methylen-bis-(6-tert.butyl-2-methylphenol), 1,1-Bis-(5-tert.butyl-4-hydroxy-2-methylphenyl)-butan, 2,6-Bis-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methylphenyl)-3-n-dodecylmercaptobutan, Ethylenglycol-bis-[3,3-bis-(3′-tert.butyl-4′-hydroxyphenyl)-butyrat], Bis-(3-tert.butyl-4-hydroxy-5-methylphenyl)-dicyclopentadien, Bis-[2-(3′-tert.butyl-2′-hydroxy-5′-methylbenzyl)-6-tert.butyl-4-methyl-phenyl]-terephthalat.

<u>1.5 Benzylverbindungen</u>, z.B. 1,3,5-Tris-(3,5-di-tert.butyl-4-hydroxybenzyl)-2,4,6-trimethylbenzol, Bis-(3,5-di-tert.butyl-4-hydroxybenzyl)-sulfid, 3, 5-Di-tert.butyl-4-hydroxybenzyl-mercaptoessigsäure-isooctylester, Bis-(4-tert.butyl-3-hydroxy-2,6-dimethylbenzyl) dithiol-terephthalat, 1,3,5-Tris-(3,5-di-tert.butyl-4-hydroxybenzyl)-isocyanurat, 1,3,5-Tris-(4-tert.butyl-3-hydroxy-2,6-dimethylbenzyl)-isocyanurat, 3,5-Di-tert.butyl-4-hydroxybenzyl-phosphonsäure-dioctadecylester, Ca-Salz des 3,5-Di-tert.butyl-4-hydroxybenzyl-phosphonsäure-monoethylester, 1,3,5-Tris-(3,5-dicyclohexyl-4-hydroxybenzyl)isocyanurat.

<u>1.6. Acylaminophenole</u>, z.B. 4-Hydroxy-laurinsäureanilid, 4-Hydroxystearinsäureanilid, 2,4-Bis-(octylmercapto)-6-(3,5-di-tert.butyl-4-hydroxyanilino)-s-triazin, N-(3,5-di-tert.butyl-4-hydroxyphenyl)-carbaminsäureoctylester.

<u>1.7. Ester der β-(3,5-Di-tert.butyl-4-hydroxyphenyl)-propionsäure</u> mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxyethyl)-isocyanurat, N,N′-bis-(hydroxyethyl)-oxalsäurediamid.

<u>1.8. Ester der β-(5-tert.butyl-4-hydroxy-3-methylphenyl)-propionsäure</u> mit ein- oder mehrwertigen Alkoholen, wie z.b. mit Methanol, Octadecanol, 1,6-Hexandiol, Neopentylglycol, Thiodiethylenglycol, Diethylenglycol,

Triethylenglycol, Pentaerythrit, Tris-(hydroxy)ethyl-isocyanurat, N,N'-Bis-(hydroxyethyl)-oxalsäurediamid.

1.9. Ester der β-(3,5-Dicyclohexyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid.

1.10. Amide der β-(3,5-Di-tert.butyl-4-hydroxyphenyl)-propionsäure, wie z.B. N,N'-Bis-(3,5-di-tert.butyl-4-hydroxyphenylpropionyl)-hexamethylendiamin, N,N'-Bis-(3,5-di-tert.butyl-4-hydroxyphenylpropionyl)-trimethylendiamin, N,N'-Bis-(3,5-di-tert.butyl-4-hydroxyphenylpropionyl)-hydrazin.

2. Beispiele für aminische Antioxidantien:

N,N'-Di-isopropyl-p-phenylendiamin, N,N'-Di-sec-butyl-p-phenylendiamin, N,N'-Bis(1,4-dimethyl-pentyl)-p-phenylendiamin, N,N'-Bis(1-ethyl-3-methyl-pentyl)-p-phenylendiamin, N,N'-Bis(1-methyl-heptyl)-p-phenylendiamin, N,N'-Dicyclohexyl-p-phenylendiamin, N,N'-Diphenyl-p-phenylendiamin, N,N'-Di-(naphthyl-2)-p-phenylendiamin, N-Isopropyl-N'-phenyl-p-phenylendiamin, N-(1,3-Dimethyl-butyl)-N'-phenyl-p-phenylendiamin, N-(1-Methyl-heptyl)-N'-phenyl-p-phenylendiamin, N-Cyclohexyl-N'-phenyl-p-phenylendiamin, 4-(p-Toluolsulfonamido)-diphenylamin, N,N'-Dimethyl-N,N'-di-sec-butyl-p-phenylendiamin, Diphenylamin, N-Allyldiphenylamin, 4-Isopropoxy-diphenylamin, N-Phenyl-1-naphthylamin, N-Phenyl-2-naphthylamin, octyliertes Diphenylamin, z.B. p,p'-Di-tert-octyldiphenylamin, 4-n-Butylamino-phenol, 4-Butyrylamino-phenol, 4-Nonanoylamino-phenol, 4-Dodecanoylamino-phenol, 4-Octadecanoylamino-phenol, Di-(4-methoxyphenyl)-amin, 2,6-Di-tert-butyl-4-dimethylamino-methyl-phenol, 2,4'-Diamino-diphenylmethan, 4,4'-Diamino-diphenylmethan, N,N,N',N'-Tetramethyl-4,4'-diamino-diphenylmethan, 1,2-Di-[(2-methyl-phenyl)-amino]-ethan, 1,2-Di-(phenylamino)-propan, (o-Tolyl)-biguanid, Di-[4-(1',3'-dimethyl-butyl)-phenyl]amin, tert-octyliertes N-Phenyl-1-naphthylamin, Gemisch aus mono- und dialkylierten tert-Butyl-/tert-Octyldiphenylaminen, 2,3-Dihydro-3,3-dimethyl-4H-1,4-benzothiazin, Phenothiazin, N-Allylphenothiazin.

3. Beispiele für weitere Antioxidantien:

Aliphatische oder aromatische Phosphite, Ester der Thiodipropionsäure oder der Thiodiessigsäure, oder Salze der Dithiocarbamid- oder Dithiophosphorsäure.

4. Beispiele für Metall-Desaktivatoren, z.B. für Kupfer, sind:

Triazole, Benztriazole und deren Derivate, Tolutriazole und deren Derivate, 2-Mercaptobenzthiazol, 2-Mercaptobenztriazol, 2,5-Dimercaptobenztriazol, 2,5-Dimercaptobenzthiadiazol, 5,5'-Methylenbisbenztriazol, 4,5,6,7-Tetrahydrobenztriazol, Salicyliden-propylendiamin, Salicylaminoguanidin und dessen Salze.

5. Beispiele für Rost-Inhibitoren sind:

a) Organische Säuren, ihre Ester, Metallsalze und Anhydride, z.B.:
N-Oleoyl-sarcosin, Sorbitan-mono-oleat, Blei-naphthenat, Alkenylbernsteinsäureanhydrid, z.B. Dodecenylbernsteinsäure-anhydrid, Alkenylbernsteinsäure-Teilester und -Teilamide, 4-Nonylphenoxyessigsäure.
b) Stickstoffhaltige Verbindungen, z.B.:
I. Primäre, sekundäre oder tertiäre aliphatische oder cycloaliphatische Amine und Amin-Salze von organischen und anorganischen Säuren, z.B. öllösliche Alkylammoniumcarboxylate.
II. Heterocyclische Verbindungen, z.B.:
Substituierte Imidazoline und Oxazoline.
c) Phosphorhaltige Verbindungen, z.B.:
Aminsalze von Phosphorsäurepartialestern oder Phosphonsäurepartialestern, Zinkdialkyldithiophosphate.
d) Schwefelhaltige Verbindungen, z.B.:
Barium-dinonylnaphthalin-sulfonate, Calciumpetroleum-sulfonate.

6. Beispiele für Viskositätsindex-Verbesserer sind:

Polyacrylate, Polymethacrylate, Vinylpyrrolidon/Methacrylat-Copolymere, Polyvinylpyrrolidone, Polybutene, Olefin-Copolymere, Styrol/Acrylat-Copolymere, Polyether.

7. Beispiele für Stockpunkterniedriger sind:

Polymethacrylat, alkylierte Naphthalinderivate.

8. Beispiele für Dispergiermittel/Tenside sind:

Polybutenylbernsteinsäureamide oder -imide, Polybutenylphosphonsäurederivate, basische Magnesium-, Calcium-, und Bariumsulfonate und -phenolate.

9. Beispiele für weitere Verschleissschutz-Additive sind:

Schwefel und/oder Phosphor und/oder Halogen enthaltende Verbindungen, wie geschwefelte pflanzliche Oele, Zinkdialkyldithiophosphate, Tritolylphosphat, chlorierte Paraffine, Alkyl- und Aryldi- und tri-sulfide, andere Triphenylphosphorothionate, Diethanolaminomethyltolyltriazol, Di(2-ethylhexyl)aminomethyltolyltriazol.

Die nachfolgenden Beispiele erläutern die Erfindung weiter, ohne sie einzuschränken. Alle Angaben in Teilen oder Prozenten beziehen sich auf das Gewicht, sofern nicht anders angegeben.

Beispiel 1: Phenyl-nonylphenyldecylphenylthionophosphat-Gemisch

Zu einem Gemisch aus 2 Mol Phenol, 0,96 Mol Nonylphenol, 0,04 Mol Decylphenol und 0,03 Mol Diethylamin (Katalysator) wird unter Rühren bei Raumtemperatur 1 Mol Phosphortrichlorid im Verlauf von 2-3 Stunden zugetropft. Nach Abklingen der Chlorwasserstoff-Entwicklung wird das Reaktionsgemisch langsam aufgeheizt und 8 Stunden bei 140°C gerührt. Anschliessend werden nicht umgesetzte Phenol-Anteile und Chlorwasserstoffreste durch 2 Stunden Rühren bei 140°C im Vakuum entfernt.

Das so erhaltene Phosphit-Gemisch wird mit 1,03 Mol Schwefel (sublimiert) versetzt und unter Rühren langsam auf 110-120°C aufgeheizt und 2 Stunden bei dieser Temperatur und 6 Stunden bei 140-150°C gerührt.

Nach dem Abkühlen wird mit Toluol verdünnt und das erhaltene Phenylnonylphenyldecylphenylthionophosphat-Gemisch der Formel

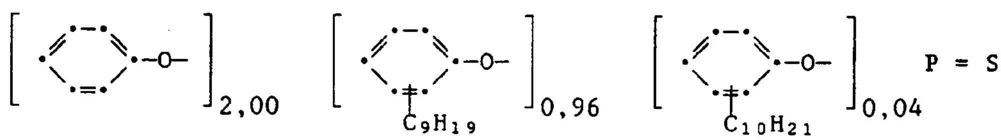

mit Natronlauge/Natriumsulfat-Lösung (10 % + 10 %) gewaschen, mit wasserfreiem Natriumsulfat getrocknet und das Lösungsmittel im Vakuum abdestilliert.

Ausbeute: 417,5 g (89,1 % der Theorie) gelbe Flüssigkeit

$n_D^{20}$: 1,5582 % P 6,61 ber.

6,58 gef.

Beispiel 2: Phenyl-o-t-butylphenyl-o-i-propylphenylthionophosphat-Gemisch

Ein Gemisch aus 2 Mol Phenol, 0,5 Mol o-t-Butylphenol und 0,5 Mol o-i-Propylphenol wird wie in Beispiel 1 beschrieben mit 1 Mol Phosphortrichlorid und anschliessend mit 0,95 Mol Schwefel umgesetzt.

Das erhaltene Thionophosphat-Gemisch der Formel

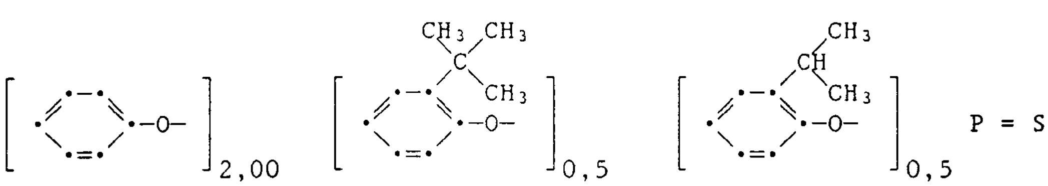

wird durch Alkaliwäsche gereinigt, getrocknet und abdestilliert.

<u>Ausbeute:</u> 332,9 g (85 % der Theorie) hellgelbe Flüssigkeit

$n_D^{20}$: 1,5794 % P 7,91 ber.

8,00 gef.

<u>Beispiel 3: Phenyl-hexylphenyl-thionophosphat-Gemisch</u>

Zu einer Mischung aus 3 Mol Phenol und 0,072 Mol konzentrierter Schwefelsäure wird bei 90°C 1 Mol 1-Hexen langsam zugetropft und 2 Stunden bei 95-100°C gerührt.

Das erhaltene Reaktionsgemisch aus Phenol und Hexylphenol wird anschliessend, wie in Beispiel 1 beschrieben, mit 1 Mol Phosphortrichlorid und 1 Mol Schwefel umgesetzt.

Das Thionophosphat-Gemisch der Formel

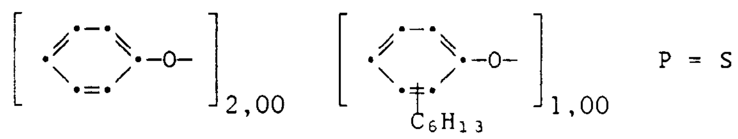

wird, wie beschrieben, durch Alkaliwäsche gereinigt, getrocknet und abdestilliert.

<u>Ausbeute:</u> 304,5 g (71 % der Theorie) hellbraune Flüssigkeit

$n_D^{20}$: 1,5635 % P 7,26 ber.

7,16 gef.

Die in der nachstehenden Tabelle 1 zusammengestellten Triarylthionophosphat-Gemische (Beispiel 4-11) werden gemäss den in Beispiel 1 bzw. Beispiel 3 beschriebenen Verfahren hergestellt.

Tabelle 1

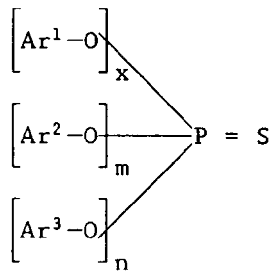

$Ar^1$ bedeutet in den Beispielen 4-11 jeweils: 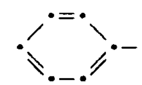

| Bei-spiel | Methode* | x | $Ar^2O$- | m | $Ar^3O$- | n | MG | % P ber. / gef. | $n_D^{20}$ |
|---|---|---|---|---|---|---|---|---|---|
| 4 | II | 1,74 | 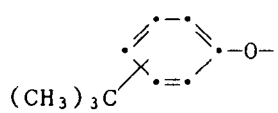 | 1,16 | 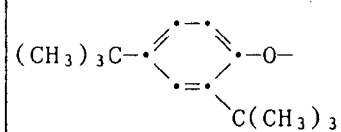 | 0,1 | 417 | 7,43<br>7,28 | 1,5705 |
| 5 | I | 0,60 | 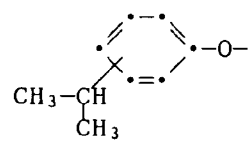 | 2,40 | - | - | 443 | 6,99<br>7,03 | 1,5650 |
| 6 | I | 2,20 | 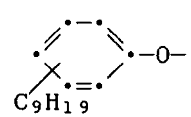 | 0,40 | 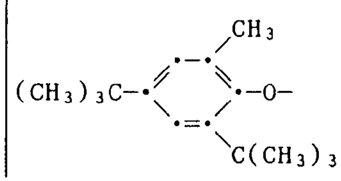 | 0,40 | 443 | 6,99<br>6,95 | 1,5665 |

Tabelle 1 (Forsetzung)

| Beispiel | Methode* | x | $Ar^2O-$ | m | $Ar^3O-$ | n | MG | % P ber. / gef. | $n_D^{20}$ |
|---|---|---|---|---|---|---|---|---|---|
| 7 | I | 2,10 | 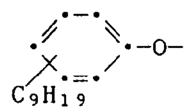 | 0,50 | 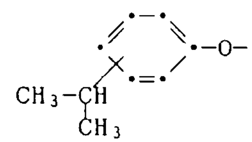 | 0,40 | 422 | 7,33<br>7,46 | 1,5682 |
| 8 | II | 2,00 | 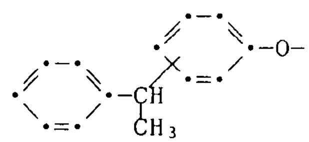 | 1,00 | - | - | 447 | 6,94<br>6,74 | 1,6049 |
| 9 | I | 2,00 | 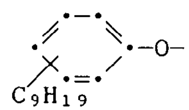 | 0,50 | 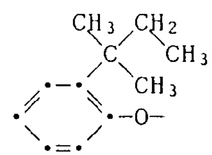 | 0,50 | 440 | 7,04<br>7,00 | 1,5658 |
| 10 | I | 2,34 | 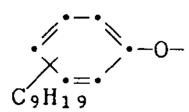 | 0,50 | 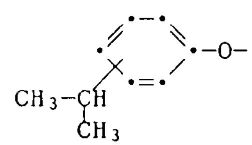 | 0,16 | 412 | 7,51<br>7,54 | 1,5705 |

Tabelle 1 (Forsetzung)

| Bei-spiel | Methode* | x | $Ar^2O-$ | m | $Ar^3O-$ | n | MG | % P ber./gef. | $n_D^{20}$ |
|---|---|---|---|---|---|---|---|---|---|
| 11 | I | 2,20 | 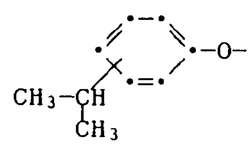 | 0,80 | - | - | 376 | 8,24<br>8,26 | 1,5804 |

*) I Herstellung gemäss Beispiel 1

II Herstellung gemäss Beispiel 3

Beispiele 12-15:Verschleissschutz- und Reibverhalten der Triarylthionophosphat-Gemische

- Antiwear/Extreme pressure-Additive zeigen unter Reibbeanspruchung, die als Funktion der Temperatur bestimmt wird, ein charakteristisches Verhalten: Oberhalb einer bestimmten Temperatur, bei welcher der Aufbau von schützenden Reaktionsschichten nicht mehr gewährleistet ist, tritt ein Umsprung in die sogenannte Verschleisshochlage ein. Die Verschleisshochlage ist dadurch gekennzeichnet, dass wesentlich höhere Verschleisswerte auftreten und zudem sehr oft auch schlechtere Reibwerte beobachtet werden. Präzise Voraussagen bezüglich den Bedingungen unter denen dieser Umsprung stattfindet, sind aufgrund des heutigen Wissenstandes nicht möglich.
- Die AW/EP-Additive werden mit dem Schwing-Reib-Verschleissgerät [SRV-Gerät DE-PS 1 648 597, vergl. Lubrication Engineering, Volume 39, No. 11 (Nov. 1982) Advertising Index, Cover 3.] charakterisiert, das auf dem folgenden Messprinzip basiert:

Eine Stahlkugel, auf die eine vertikale Kraft $F_N$ wirkt, führt auf einem Stahlzylinder eine oszillierende Gleitbewegung aus. Die Horizontal- und Vertikalkräfte werden mit einem piezoelektrischen Kraftaufnehmer bestimmt. Einige Tropfen Oel die 2 Gew.-% der zu untersuchenden Verbindung enthalten, werden zwischen Kugel und Zylinder aufgebracht. Mit diesem Versuch lässt sich gleichzeitig der Reibungskoeffizient und der Verschleiss bestimmen. Zur Charakterisierung des Verschleisses wird mit einem Tastschnittgerät (Talysurf 10) ein Querprofil aufgenommen und als Verschleissmass die integrierte Querprofilfläche bestimmt. Bei den angegebenen Verschleisswerten handelt es sich demnach um relative Verschleisswerte. Die Werte werden in $cm^2$ x 0,2 x $10^{-5}$ bestimmt. Hohe Werte bedeuten hohen Verschleiss.

Als Basisöl dient jeweils ein Mineralöl ISO VG 32.

- In der nachstehenden Tabelle 2 ist die Verschleissschutzwirkung der erfindungsgemässen Triarylthionophosphat-Gemische im Vergleich zum unlegierten Basisöl zusammengestellt. Dem obigen Basisöl werden vor dem Test jeweils 2 Gew.-% der jeweils zu prüfenden Verbindung zugesetzt.

Tabelle 2 SRV-Verschleissmessungen

Verschleiss: $cm^2 \times 0,2 \times 10^{-5}$

| Beispiel | Verbindung aus Beispiel (2 Gew.-% bezogen auf das Basisöl) | SRV-Verschleiss | |
|---|---|---|---|
| | | 100°C | 150°C |
| 12 | 4 | 1,3 | 4,6 |
| 13 | 3 | 1,1 | 6,2 |
| 14 | 6 | 1,2 | 4,0 |
| 15 | 10 | 0,8 | 4,3 |
| 16 Vergleich | Basisöl ISO VG 32 | 14,0 | 24,6 |

## Patentansprüche

1. Zusammensetzung, enthaltend
   a) einen Schmierstoff oder eine Hydraulikflüssigkeit und
   b) ein Triarylthionophosphat-Gemisch der statistischen Bruttoformel (I)

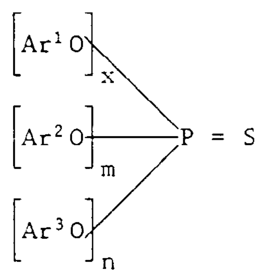 (I),

wobei
x 0 bis 2,7,
m 3-(x+n) und
n 0 bis 3-(x+m) sind, und
x + m + n = 3 ist,
$Ar^1$ die Bedeutung von

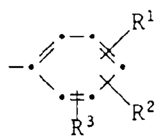 ,

$Ar^2$ die Bedeutung von

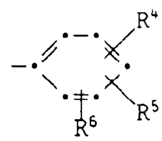 ,

und
$Ar^3$ die Bedeutung von

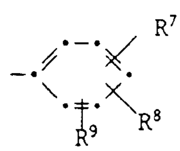

haben,
wobei $R^1$, $R^2$, $R^3$, $R^5$, $R^6$, $R^8$ und $R^9$ unabhängig voneinander die Bedeutung von -H, Alkyl mit 1 bis 18 C-Atomen, Cycloalkyl mit 5 bis 12 C-Atomen, mit 1 bis 3 $C_1$-$C_4$-Alkylgruppen substituiertes Cycloalkyl mit 5 bis 12 Ring-C-Atomen, Phenyl oder Phenyl-$C_1$-$C_3$-alkyl haben und $R^4$ und $R^7$ unabhängig voneinander die Bedeutung von Alkyl mit 1 bis 18 C-Atomen, Cycloalkyl mit 5 bis 12 C-Atomen, mit 1 bis 3 $C_1$-$C_4$-Alkylgruppen substituiertes Cycloalkyl mit 5 bis 12 Ring-C-Atomen, Phenyl oder Phenyl-$C_1$-$C_3$-alkyl haben, mit der Massgabe, dass x und n nicht gleichzeitig 0 sind, dass wenigstens zwei der Reste $Ar^1$, $Ar^2$ und $Ar^3$ voneinander verschieden sind und dass Dixylenylparakresylthionophosphat ausgeschlossen ist.

**2.** Zusammensetzung nach Anspruch 1, wobei in Gemischen der Formel I
x 0 bis 2,6,
m 0,02 bis 2,98 und
n 0 bis 2,98 sind.

**3.** Zusammensetzung nach Anspruch 1, wobei in Gemischen der Formel I
x 0,1 bis 2,6,
m 0,1 bis 2,9 und

n 0 bis 2,8 sind.

4. Zusammensetzung nach Anspruch 1, wobei in Gemischen der Formel I $Ar^1$ die Bedeutung von Phenyl hat.

5. Zusammensetzung nach Anspruch 4, wobei in Gemischen der Formel I x 0,001 bis 2,6 ist.

6. Zusammensetzung nach Anspruch 5, wobei in Gemischen der Formel I
x 0,01 bis 2,6,
m 0,02 bis 2,99 und
n 0 bis 2,97 ist.

7. Zusammensetzung nach Anspruch 1, wobei in Gemischen der Formel I $R^4$ $C_1$-$C_{15}$-Alkyl, Cyclohexyl, Phenyl oder Phenyl-$C_1$-$C_3$-alkyl, $R^5$ -H oder $C_1$-$C_{12}$-Alkyl und $R^6$ -H oder $C_1$-$C_5$-Alkyl darstellen.

8. Zusammensetzung nach Anspruch 7, wobei $R^4$ die Bedeutung von $C_1$-$C_{12}$-Alkyl, Cyclohexyl oder Phenyl-$C_1$-$C_3$-alkyl hat und $R^5$ und $R^6$, unabhängig voneinander, die Bedeutung von -H oder $C_1$-$C_4$-Alkyl haben.

9. Zusammensetzung nach Anspruch 8, wobei $R^4$ $C_3$-$C_{12}$-Alkyl oder Cyclohexyl und $R^5$ und $R^6$, unabhängig voneinander, -H oder $C_1$-$C_4$-Alkyl darstellen.

10. Zusammensetzung nach Anspruch 9, wobei $R^5$ und $R^6$, unabhängig voneinander, -H oder -$CH_3$ darstellen.

11. Zusammensetzung nach Anspruch 9, wobei $R^4$ $C_3$-$C_9$-Alkyl und $R^5$ und $R^6$ -H darstellen.

12. Zusammensetzung nach Anspruch 1, wobei in Verbindungen der Formel I im Substituenten $Ar^2$ der Rest $R^4$ in ortho- oder para-Stellung ist.

13. Zusammensetzung nach Anspruch 1, wobei in Verbindungen der Formel I $R^7$ $C_1$-$C_{15}$-Alkyl oder Cyclohexyl und $R^8$ und $R^9$ , unabhängig voneinander, -H oder $C_1$-$C_{12}$-Alkyl darstellen.

14. Zusammensetzung nach Anspruch 13, wobei $R^7$ $C_1$-$C_{12}$-Alkyl oder Cyclohexyl, $R^8$ -H oder $C_1$-$C_5$-Alkyl und $R^9$ -H oder $C_1$-$C_{12}$-Alkyl darstellen.

15. Zusammensetzung nach Anspruch 14, wobei $R^8$ -H oder $C_1$-$C_4$-Alkyl und $R^9$ -H oder $C_1$-$C_{10}$-Alkyl darstellen.

16. Zusammensetzung nach Anspruch 14, wobei $R^7$ $C_3$-$C_{10}$-Alkyl oder Cyclohexyl und $R^8$ und $R^9$, unabhängig voneinander, -H oder $C_1$-$C_4$-Alkyl darstellen.

17. Zusammensetzung nach Anspruch 1 enthaltend wenigstens ein Triarylthionophosphat-Gemisch aus der Reihe mit den Formeln

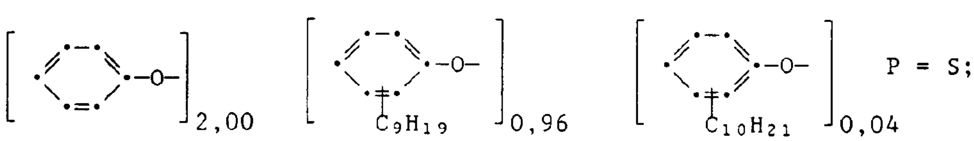

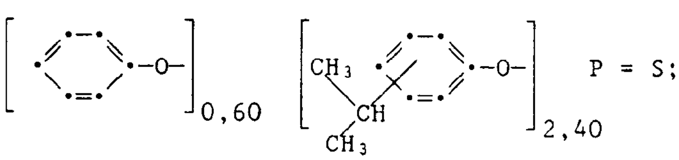

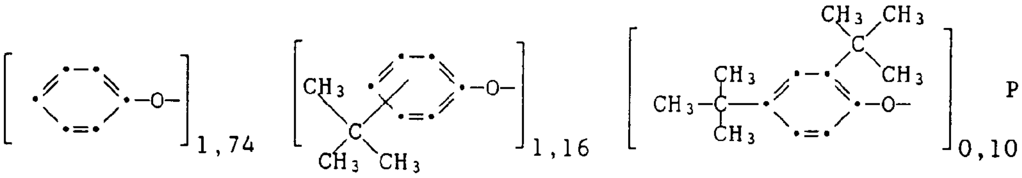

P = S;

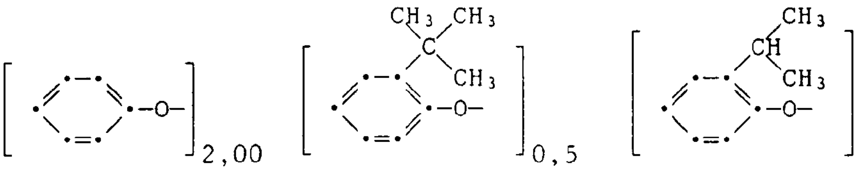

P = S;

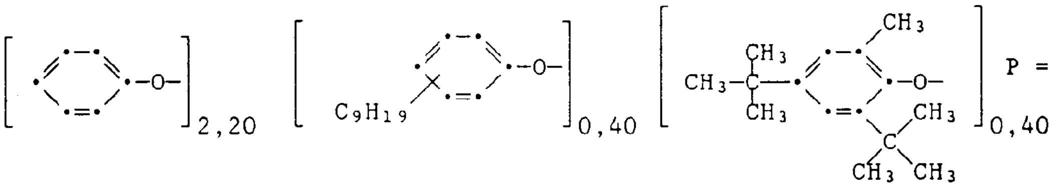

P = S;

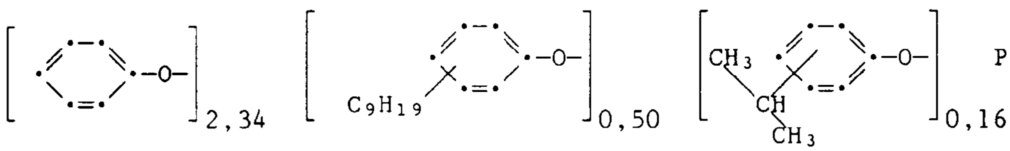

P = S;

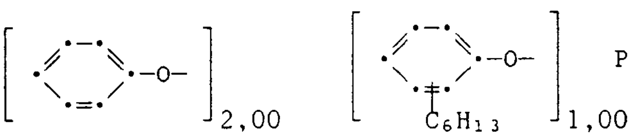

P = S;

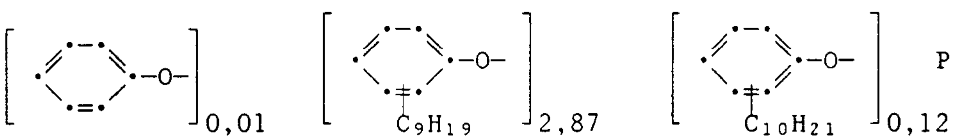

P = S;

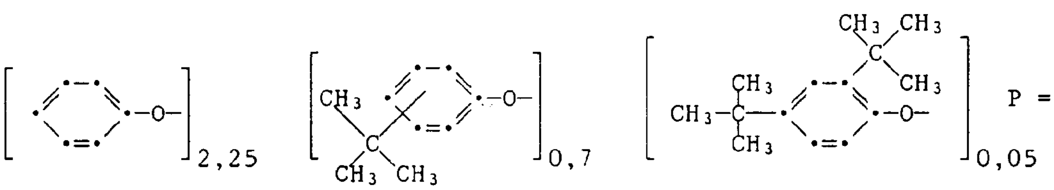

P = S

und

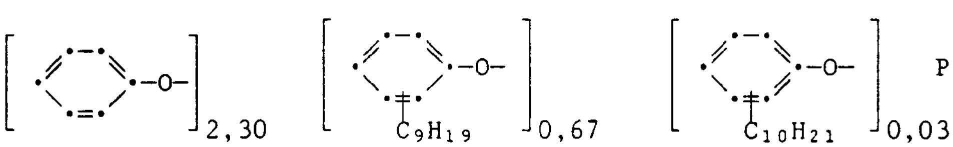

P = S.

**18.** Zusammensetzung nach Anspruch 1 enthaltend

a) ein Schmieröl aus der Reihe der Mineralöle, der synthetischen Oele oder der Mischungen davon,

und

b) wenigstens ein Triarylthionophosphat-Gemisch der Formel I.

**19.** Zusammensetzung nach Anspruch 18, worin das Schmieröl ein Oel für Verbrennungskraftmaschinen nach dem Diesel- oder Ottoprinzip ist.

**20.** Verwendung der Zusammensetzungen nach Anspruch 1 als Verschleissschutz-Zusatz in Schmierstoffen und Hydraulikflüssigkeiten.

**21.** Verwendung nach Anspruch 20 für Einsatzzwecke bei Temperaturen von 60 bis 200°C.

**22.** Verwendung nach Anspruch 20 für Einsatzzwecke bei Temperaturen von 100 bis 180°C.

## Claims

**1.** A composition containing

a) a lubricant or a hydraulic fluid and

b) a triaryl thionophosphate mixture of the empirical formula I

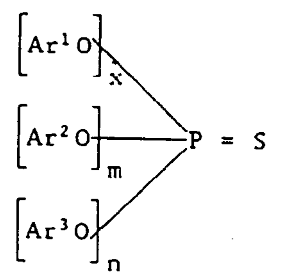

(I)

in which x is 0 to 2.7, m is 3-(x+n) and n is 0 to 3-(x+m) and x+m+n is 3,

$Ar^1$ is

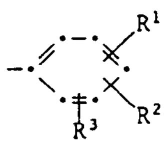

,

$Ar^2$ is

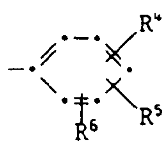

and

$Ar^3$ is

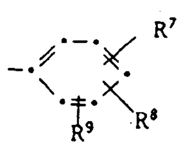

$R^1$, $R^2$, $R^3$, $R^5$, $R^6$, $R^8$ and $R^9$ independently of one another being H, alkyl having 1 to 18 C atoms, cycloalkyl having 5 to 12 C atoms, cycloalkyl which has 5 to 12 ring C atoms and is substituted by 1 to 3 $C_1$-$C_4$alkyl

groups, phenyl or phenyl-$C_1$-$C_3$alkyl and $R^4$ and $R^7$, independently of one another, being alkyl having 1 to 18 C atoms, cycloalkyl having 5 to 12 C atoms, cycloalkyl which has 5 to 12 ring C atoms and is substituted by 1 to 3 $C_1$-$C_4$alkyl groups, phenyl or phenyl-$C_1$-$C_3$alkyl, subject to the proviso that x and n are not 0 at the same time, that at least two of the radicals $Ar^1$, $Ar^2$ and $Ar^3$ are different from one another and that dixylenyl paracresyl thionophosphate is excluded.

2. A composition according to claim 1, wherein, in mixtures of the formula I, x is 0 to 2.6, m is 0.02 to 2.98 and n is 0 to 2.98.

3. A composition according to claim 1, wherein, in mixtures of the formula I, x is 0.1 to 2.6, m is 0.1 to 2.9 and n is 0 to 2.8.

4. A composition according to claim 1, wherein, in mixtures of the formula I, $Ar^1$ is phenyl.

5. A composition according to claim 4, wherein, in mixtures of the formula I, x is 0.001 to 2.6.

6. A composition according to claim 5, wherein, in mixtures of the formula I, x is 0.01 to 2.6, m is 0.02 to 2.99 and n is 0 to 2.97.

7. A composition according to claim 1, wherein, in mixtures of the formula I, $R^4$ is $C_1$-$C_{15}$alkyl, cyclohexyl, phenyl or phenyl-$C_1$-$C_3$alkyl, $R^5$ is H or $C_1$-$C_{12}$alkyl and $R_6$ is H or $C_1$-$C_5$alkyl.

8. A composition according to claim 7, wherein $R^4$ is $C_1$-$C_{12}$alkyl, cyclohexyl or phenyl-$C_1$-$C_3$alkyl and $R^5$ and $R^6$, independently of one another, are H or $C_1$-$C_4$alkyl.

9. A composition according to claim 8, wherein $R^4$ is $C_3$-$C_{12}$alkyl or cyclohexyl and $R^5$ and $R^6$, independently of one another, are H or $C_1$-$C_4$alkyl.

10. A composition according to claim 9, wherein $R^5$ and $R^6$, independently of one another, are H or $CH_3$.

11. A composition according to claim 9, wherein $R^4$ is $C_3$-$C_9$alkyl and $R^5$ and $R^6$ are H.

12. A composition according to claim 1, wherein, in compounds of the formula I, the radical $R^4$ is in the ortho-position or para-position in the substituent $Ar^2$.

13. A composition according to claim 1, wherein, in compounds of the formula I, $R^7$ is $C_1$-$C_{15}$alkyl or cyclohexyl and $R^8$ and $R^9$, independently of one another, are H or $C_1$-$C_{12}$alkyl.

14. A composition according to claim 13, wherein $R^7$ is $C_1$-$C_{12}$alkyl or cyclohexyl, $R^8$ is H or $C_1$-$C_5$alkyl and $R^9$ is H or $C_1$-$C_{12}$alkyl.

15. A composition according to claim 14, wherein $R^8$ is H or $C_1$-$C_4$alkyl and $R^9$ is H or $C_1$-$C_{10}$alkyl.

16. A composition according to claim 14, wherein $R^7$ is $C_3$-$C_{10}$alkyl or cyclohexyl and $R^8$ and $R^9$, independently of one another, are H or $C_1$-$C_4$alkyl.

17. A composition according to claim 1, containing at least one triaryl thionophosphate mixture from the series having the formulae

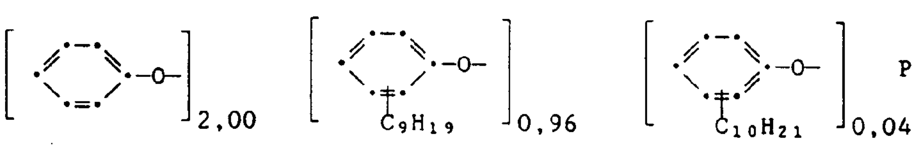 P = S;

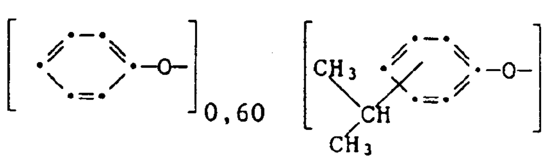 P = S;

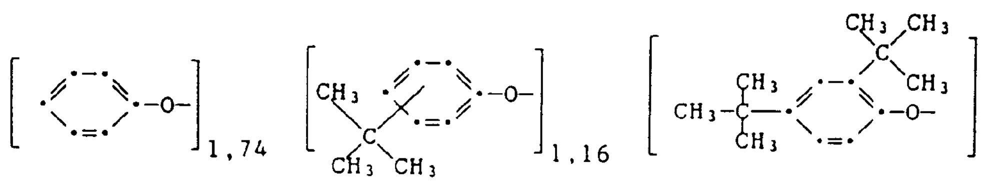

P = S;

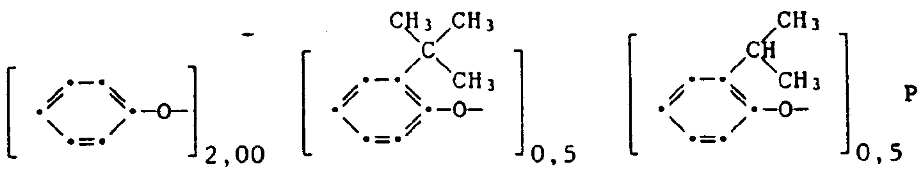

P = S;

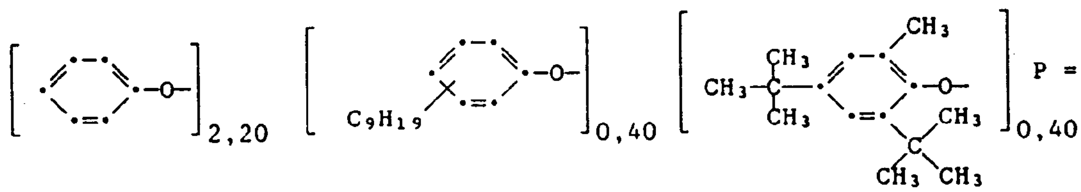

P = S;

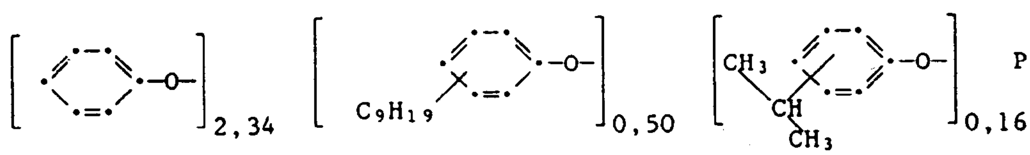

P = S;

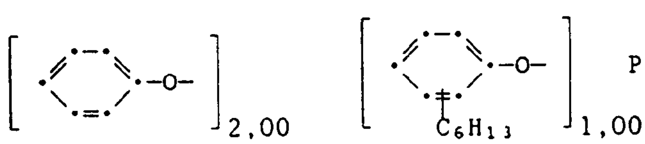

P = S;

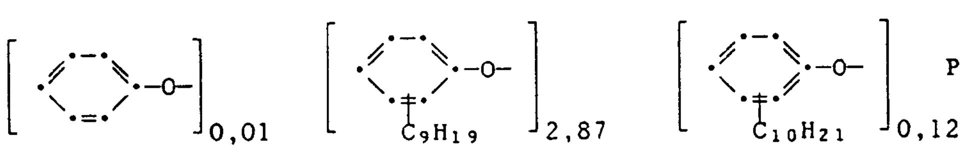

P = S;

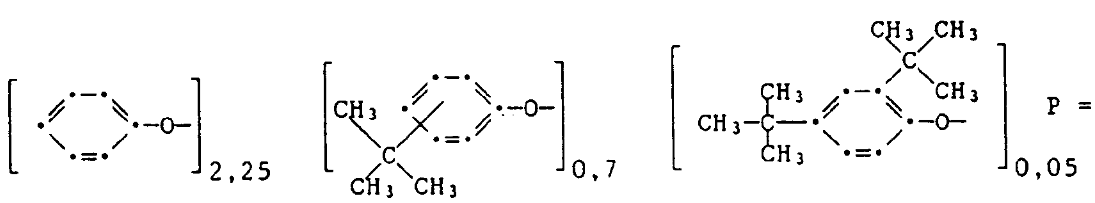

P = S

and

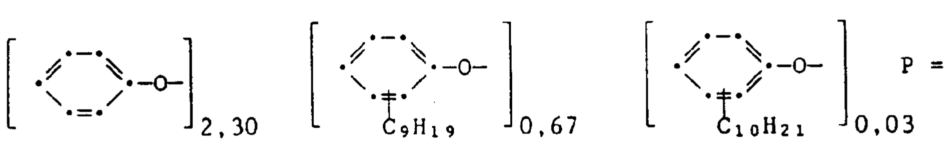

P = S.

**18.** A composition according to claim 1 containing

a) a lubricating oil from the series of mineral oils, synthetic oils or mixtures thereof, and
b) at least one triaryl thionophosphate mixture of the formula I.

19. A composition according to claim 18, wherein the lubricating oil is an oil for internal combustion machines working on the diesel or Otto principle.

20. The use of a composition according to claim 1 as an anti-wear additive in lubricants and hydraulic fluids.

21. Use according to claim 20 for applications at temperatures from 60 to 200°C.

22. Use according to claim 20 for applications at temperatures from 100 to 180°C.

## Revendications

1. Composition contenant
a) un lubrifiant ou un fluide hydraulique et
b) un mélange de thionophosphates de triaryle de formule brute statistique I

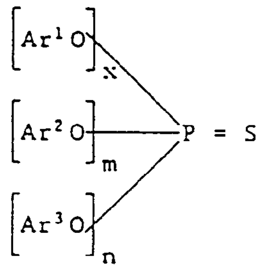

(I),

dans laquelle
x est compris entre 0 et 2,7,
m est égal à 3-(x+n) et
n est compris entre 0 et 3-(x+m) et
x + m + n = 3,
$Ar^1$ représente

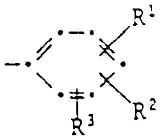

,

$Ar^2$ représente

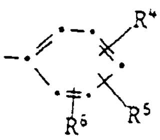

et
$Ar^3$ représente

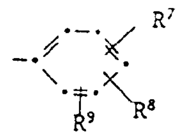 ,

où $R^1$, $R^2$, $R^3$, $R^5$, $R^6$, $R^8$ et $R^9$ représentent, indépendamment l'un de l'autre, -H, alkyle de 1 à 18 atomes de carbone, cycloalkyle de 5 à 12 atomes de carbone, cycloalkyle de 5 à 12 atomes de carbone cycliques substitué par 1 à 3 groupes alkyle en $C_1$-$C_4$, phényle ou phényl-(alkyle en $C_1$-$C_3$), et $R^4$ et $R^7$ représentent, indépendamment l'un de l'autre, alkyle de 1 à 18 atomes de carbone, cycloalkyle de 5 à 12 atomes de carbone, cycloalkyle de 5 à 12 atomes de carbone cycliques substitué par 1 à 3 groupes alkyle en $C_1$-$C_4$, phényle ou phényl-(alkyle en $C_1$-$C_3$), sous réserve que x et n ne soient pas nuls en même temps, qu'au moins deux des restes $Ar^1$, $Ar^2$ et $Ar^3$ soient différents l'un de l'autre et que soit exclu le thionophosphate de dixylényle-paracrésyle.

2. Composition selon la revendication 1, dans laquelle, dans les mélanges de formule I
x est compris entre 0 et 2,6,
m est compris entre 0,02 et 2,98 et
n est compris entre 0 et 2,98.

3. Composition selon la revendication 1, dans laquelle, dans les mélanges de formule I
x est compris entre 0,1 et 2,6,
m est compris entre 0,1 et 2,9 et
n est compris entre 0 et 2,8.

4. Composition selon la revendication 1, dans laquelle, dans les mélanges de formule I, $Ar^1$ représente un phényle.

5. Composition selon la revendication 4, dans laquelle, dans les mélanges de formule I, x est compris entre 0,001 et 2,6.

6. Composition selon la revendication 5, dans laquelle, dans les mélanges de formule I,
x est compris entre 0,01 et 2,6,
m est compris entre 0,02 et 2,99 et
n est compris entre 0 et 2,97.

7. Composition selon la revendication 1, dans laquelle, dans les mélanges de formule I, $R^4$ est alkyle en $C_1$-$C_{15}$, cyclohexyle, phényle ou phényl-(alkyle en $C_1$-$C_3$), $R^5$ est -H ou alkyle en $C_1$-$C_{12}$ et $R^6$ est -H ou alkyle en $C_1$-$C_5$.

8. Composition selon la revendication 7, dans laquelle $R^4$ est alkyle en $C_1$-$C_{12}$, cyclohexyle ou phényl-(alkyle en $C_1$-$C_3$) et $R^5$ et $R^6$ sont, indépendamment l'un de l'autre, -H ou alkyle en $C_1$-$C_4$.

9. Composition selon la revendication 8, dans laquelle $R^4$ signifie alkyle en $C_3$-$C_{12}$ ou cyclohexyle et $R^5$ et $R^6$ sont indépendamment l'un de l'autre -H ou alkyle en $C_1$-$C_4$.

10. Composition selon la revendication 9, dans laquelle $R^5$ et $R^6$ représentent, indépendamment l'un de l'autre, -H ou $-CH_3$.

11. Composition selon la revendication 9, dans laquelle $R^4$ représente alkyle en $C_3$-$C_9$ et $R^5$ et $R^6$ représentent -H.

12. Composition selon la revendication 1, dans laquelle, dans les composés de formule I, le reste $R^4$ dans le substituant $Ar^2$ est en position ortho ou para.

13. Composition selon la revendication 1 dans laquelle, dans les composés de formule I, $R^7$ représente alkyle en $C_1$-$C_{15}$ ou cyclohexyle et $R^8$ et $R^9$ sont, indépendamment l'un de l'autre, -H ou alkyle en $C_1$-$C_{12}$.

14. Composition selon la revendication 13, dans laquelle $R^7$ représente alkyle en $C_1$-$C_{12}$ ou cyclohexyle, $R^8$

est -H ou alkyle en $C_1$-$C_5$ et $R^9$ est -H ou alkyle en $C_1$-$C_{12}$.

**15.** Composition selon la revendication 14, dans laquelle $R^8$ représente -H ou alkyle en $C_1$-$C_4$ et $R^9$ est -H ou alkyle en $C_1$-$C_{10}$.

**16.** Composition selon la revendication 14, dans laquelle $R^7$ représente alkyle en $C_3$-$C_{10}$ ou cyclohexyle et $R^8$ et $R^9$ sont, indépendamment l'un de l'autre, -H ou alkyle en $C_1$-$C_4$.

**17.** Composition selon la revendication 1, contenant au moins un mélange de thionophosphates de triaryle de la série ayant les formules

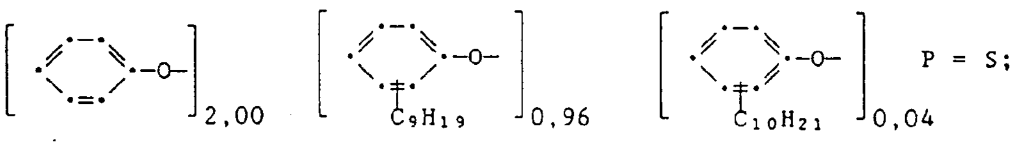

P = S;

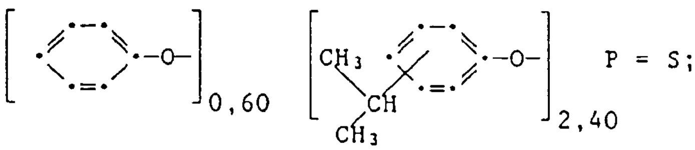

P = S;

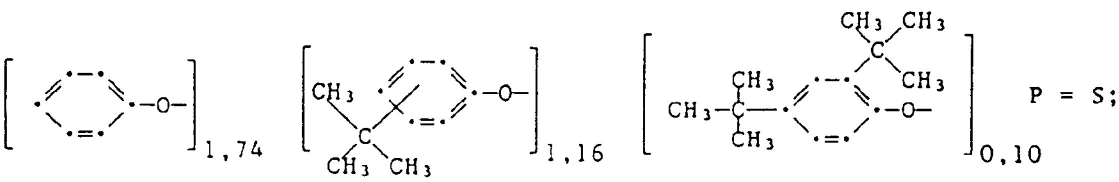

P = S;

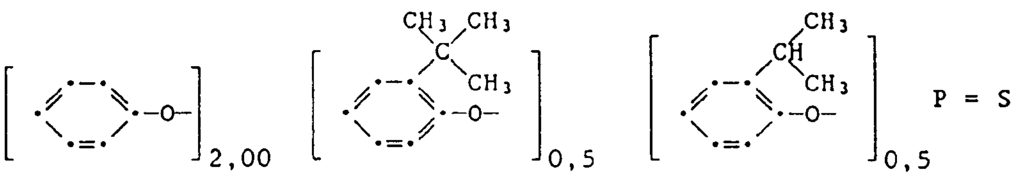

P = S;

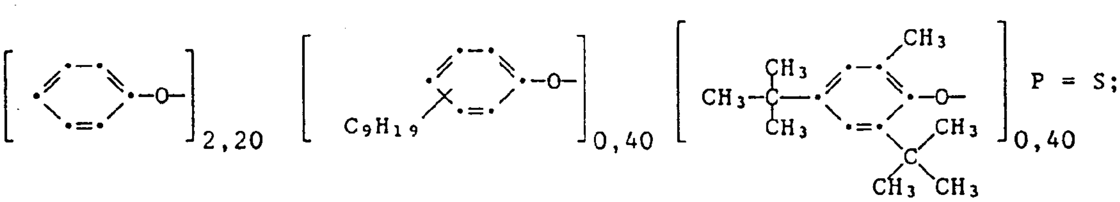

P = S;

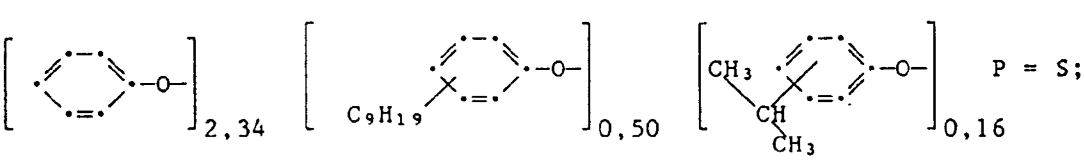

P = S;

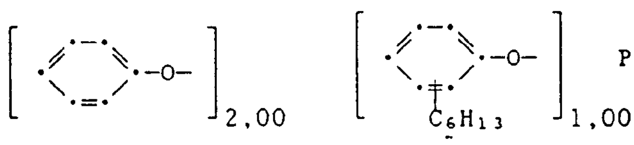

P = S;

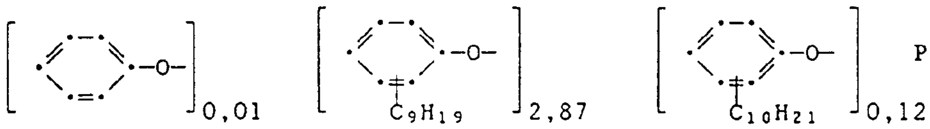

P = S;

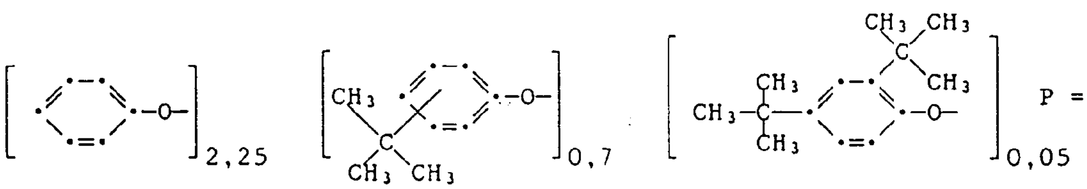

P = S

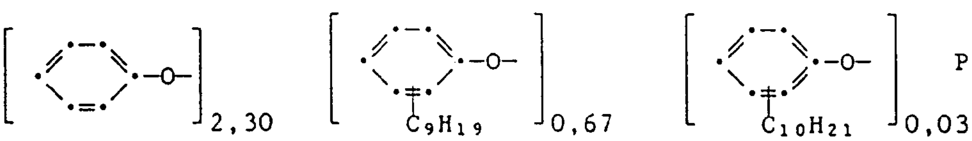

P = S.

**18.** Composition selon la revendication 1, contenant

a) une huile lubrifiante de la série des huiles minérales, des huiles synthétiques ou de leurs mélanges, et

b) au moins un mélange de thionophosphates de triaryle de formule I.

**19.** Composition selon la revendication 18, dans laquelle l'huile lubrifiante est une huile pour machines à combustion interne Diesel ou à allumage par étincelle.

**20.** Application des compositions selon la revendication 1 comme additifs anti-usure dans des lubrifiants et des fluides hydrauliques.

**21.** Application selon la revendication 20 à des fins de mise en oeuvre à des températures de 60 à 200°C.

**22.** Application selon la revendication 20 à des fins de mise en oeuvre à des températures de 100 à 180°C.